# EUROPÄISCHE PATENTANMELDUNG

(11) **EP 1 095 567 A1**
(43) Veröffentlichungstag der Anmeldung: **02.05.2001**
(21) Anmeldenummer: 99121488.3
(22) Anmeldetag: 28.10.1999
(51) Int. Cl.: A01N 65/00, A23L 3/3472

(54) **Verfahren zur Herstellung biologischer Wirkstoffe mit keimtötender und keimhemmender Wirkung**

(71) Anmelder: Hansen, Wilhelm, 25421 Pinneberg (DE)
(72) Erfinder: Hansen, Wilhelm, 25421 Pinneberg (DE)
(74) Vertreter: Stenger, Watzke & Ring Patentanwälte

(57) **Zusammenfassung**

Die Erfindung betrifft ein Verfahren zur Herstellung biologischer Wirkstoffe mit keimtötender Wirkung. Unter biologischen Wirkstoffen mit keimtötender Wirkung sind im Sinne der vorliegenden Erfindung Wirkstoffe zu verstehen, die neben den keimtötenden auch bakteriostatische Eigenschaften aufweisen und zu Konservierungs- und Desinfektionszwecken sowie als Pflanzenschutzmittel und Insektenvertilgungsstoffe mit bakterizider und bakteriostatischer, fungizider und/oder insektizider Wirkung verwendet werden. Um ein Verfahren zu schaffen, welches auf einfach Weise durchführbar und leicht automatisierbar ist und welches zudem wenig umweltbelastend ist, wird ein Verfahren vorgeschlagen, welches die nachfolgenden Verfahrensschritte umfaßt:
a) Zubereitung eines Grundgemenges durch Zerkleinern und Mischen verschiedener Arten von pflanzlichen Grundsubstraten;
b) Zugabe von Flüssigkeit zu dem Grundgemenge zur Bildung eines Ansatzes mit einem Flüssigkeitsanteil von wenigstens 50 Gew.%;
c) Lagerung des Ansatzes für eine vorgebbare Zeitdauer zur Auslösung biologischer Wirkstoffe aus dem Grundgemenge und
d) Ausscheiden der ausgelösten Wirkstoffe durch Extrahierung.

## Beschreibung

Die vorliegende Erfindung betrifft ein Verfahren zur Herstellung biologischer Wirkstoffe mit keimtötender und keimhemmender Wirkung.

Unter biologischen Wirkstoffen mit keimtötender und keimhemmender Wirkung sind im Sinne der vorliegenden Erfindung Wirkstoffe zu verstehen, die neben den keimtötenden auch bakteriostatische Eigenschaften aufweisen und zu Konservierungs- und Desinfektionszwecken sowie als Pflanzenschutzmittel und Insektenvertilgungsstoffe mit bakterizider und bakteriostatischer, fungizider und/oder insektizider Wirkung verwendet werden. Auch zu anderen, wie beispielsweise kosmetischen Zwecken können die mit dem erfindungsgemäßen Verfahren hergestellten Wirkstoffe eingesetzt werden.

Insbesondere zur Herstellung von Pflanzenschutzmitteln und Insektenvertilgungsstoffen ist es bekannt, synthetische Wirkstoffe zu verwenden, die aus geeigneten Chemikalien hergestellt sind. Aber auch Mittel zu Konservierungs- und Desinfektionszwecken werden auf synthetische Weise unter Einsatz entsprechender Chemikalien hergestellt. Vielfach eingesetzte synthetische Wirkstoffe sind beispielsweise Sorbinsäure Kaliumsorbat, PHB-Ester, Benzoe- und Phenylsäure. Synthetische Wirkstoffe der vorgenannten Art werden in industriellen Großanlagen hergestellt und stehen nahezu unbegrenzt zur Verfügung.

Nachteilig bei den Verfahren zur Herstellung synthetischer Wirkstoffe ist jedoch zum einen, daß diese Verfahren sehr energieaufwendig und zum anderen sehr stark umweltbelastend wirken. Weiter hinzu kommt, daß die nach den vorbekannten Verfahren hergestellten synthetischen Wirkstoffe nicht unbedenklich zu den oben aufgeführten Zwecken eingesetzt werden können. So verändern synthetisch hergestellte Wirkstoffe, die als Konservierungsmittel eingesetzt werden, die Eigenschaften der zu konservierenden Lebensmittel und können unter Umständen den Geschmack nachteilig beeinflussen. Zudem kann eine Überdosierung synthetisch hergestellter Konservierungswirkstoffe zu einer Vergiftung führen. Auch der Einsatz synthetisch hergestellter Wirkstoffe als Pflanzenschutzmittel oder Insektenvertilgungsstoffe ist nicht unbedenklich. So gelangen Rückstände derartiger Wirkstoffe unweigerlich in die Lebensmittelnahrungskette und können bei Überschreitung bestimmter Grenzwerte eine erhebliche Gefahr auch hinsichtlich bleibender Schädigungen darstellen. Insbesondere der Einsatz von synthetisch hergestellten Pestiziden und Insektiziden stellt, vor allem bei übermäßigem Einsatz, eine hohe Belastung für Mensch und Umwelt dar. Ein weiterer erheblicher Nachteil ergibt sich aus der Tatsache, daß synthetisch hergestellte Wirkstoffe zumeist biologisch nicht abbaubar sind und sich deren Rückstände unkontrolliert im Trinkwasser anreichern. Dies hat im Zuge der Trinkwasseraufbereitung ein Herauslösen dieser Stoffe unter erheblichem technischen wie wirtschaftlichen Aufwand zur Folge.

Hiervon ausgehend liegt der Erfindung daher die **Aufgabe** zugrunde, ein Verfahren zur Herstellung von biologischen Wirkstoffen anzugeben, welches auf einfache Weise durchführbar und leicht automatisierbar ist und welches zudem wenig umweltbelastend ist. Weiterhin ist es Aufgabe der Erfindung biologische Wirkstoffe anzugeben, die ernährungsphysiologisch unbedenklich sind und auch bei einer Überdosierung weder eine Beeinträchtigung noch ein Verletzungsrisiko darstellen.

Zur **Lösung** dieser Aufgabe wird mit der Erfindung ein Verfahren zur Herstellung biologischer Wirkstoffe mit keimtötender Wirkung vorgeschlagen, welches die nachfolgenden Verfahrensschritte umfaßt:
a) Zubereitung eines Grundgemenges durch Zerkleinern und Mischen verschiedener Arten von pflanzlichen Grundsubstraten;
b) Zugabe von Flüssigkeit zu dem Grundgemenge zur Bildung eines Ansatzes mit einem Flüssigkeitsanteil von wenigstens 50 Gew.%;
c) Lagerung des Ansatzes für eine vorgebbare Zeitdauer zur Auslösung biologischer Wirkstoffe aus dem Grundgemenge;
d) Ausscheiden der ausgelösten Wirkstoffe durch Extrahierung.

Mit diesem Verfahren ist es auf einfachste Weise möglich, biologische Wirkstoffe herzustellen, wobei die Durchführung des Verfahrens unabhängig von der Art des herzustellenden Wirkstoffes ist. In vorteilhafter Weise kann dieses Verfahren sowohl zur Herstellung von Konservierungs - und Desinfektionsmitteln verwendet werden, wie auch zur Herstellung biologisch wirkender Pflanzenschutzmittel und Insektenvertilgungsstoffe. Die Art des herzustellenden Wirkstoffs bestimmt sich einzig und allein über die zur Herstellung verwendeten unterschiedlichen Arten von pflanzlichen Grundsubstraten. Eine einfache Handhabung des Verfahrens sowie eine gute Automatisierbarkeit sind in vorteilhafter Weise die Folge. Zudem ist dieses Verfahren äußerst umweltschonend, da sämtliche bei diesem Verfahren anfallenden Abfallprodukte biologischer Art und damit naturbelassen sind.

Zur Durchführung des Verfahrens und zur Herstellung biologischer Wirkstoffe werden zunächst in einem ersten Verfahrensschritt unterschiedliche Arten von pflanzlichen Grundsubstraten zerkleinert und zu einem Grundgemenge miteinander vermischt. Dabei können als pflanzliche Grundsubstrate Früchte, insbesondere Beeren, Gemüse, Moose, Flechten, Rinden und/oder Kräuter sowie Teile hiervon verwendet werden. Auch ist es im Sinne der Erfindung für die Zubereitung des Grundgemenges im ersten Verfahrensschritt anstelle einer Mehrzahl unterschiedlicher Arten von pflanzlichen Grundsubstraten auch nur ein einziges Grundsubstrat zu verwenden. Entscheidend ist bei der Auswahl des wenigstens einen Grundsubstrats und/oder der Mehrzahl unterschiedlicher Grundsubstrate, daß der herzustellende Wirkstoff nach Beendigung des erfindungsgemäßen Verfahrens die gewünschten Eigenschaften aufweist. In Abhängigkeit des herzustellenden Wirkstoffs, ob dieser also als Mittel zu Konservierungs- oder Desinfektionszwecken verwendet werden soll, oder ob ein Pflanzenschutzmittel bzw. ein Insektenvertilgungsstoff hergestellt werden soll, ist mithin ein entsprechendes Substrat und/oder Substratkombinationen auszuwählen. So können beispielsweise als Gemüsesorten Blatt-, Stengel- und Spargelgemüse, Wurzel- und Knollengemüse sowie Zwiebelgewächse, Wildgemüse und -salate verwendet werden.

Nach Zubereitung des Grundgemenges wird diesem zur Bildung eines Ansatzes Flüssigkeit zugegeben, wobei der Flüssigkeitsgesamtanteil mindestens 50 Gew.% beträgt. Als Flüssigkeiten eignen sich dabei Wasser, Speiseöl, Essig sowie Alkohol. In Abhängigkeit der verwendeten pflanzlichen Grundsubstrat kann zur Bildung eines Ansatzes entweder eine der genannten Flüssigkeiten oder eine Kombination mehrerer unterschiedlicher Flüssigkeiten verwendet werden. Entscheidend ist, daß die Flüssigkeiten dem Herauslösen von Wirkstoffen aus dem Grundgemenge dienen und mithin hierauf die Auswahl der zu verwendenden Flüssigkeiten abzustimmen ist.

Im Anschluß an die Herstellung des Ansatzes erfolgt im nächsten Verfahrensschritt die Lagerung desselbigen für eine vorgebbare Zeitdauer. Während der Lagerungsphase quellen die pflanzlichen Grundsubstrate auf, was einer Auslösung von biologischen Wirkstoffen aus dem Grundgemenge zur Folge hat. Untersuchungen haben hierbei gezeigt, daß sich möglichst effektive Auslösungsraten bei einer Lagerung des Ansatzes für eine Zeitdauer von wenigstens 6 Stunden, vorzugsweise 12 bis 24 Stunden, ergeben. Der Auslösungsprozeß kann darüber hinaus durch Erwärmung oder Umrühren des Ansatzes beschleunigt werden. Es ist jedoch darauf zu achten, daß beschleunigende Maßnahmen, wie beispielsweise die Erhöhung der Lagertemperatur, nicht eine Zerstörung der pflanzlichen Grundsubstrate und damit eine Zerstörung der biologischen Wirkstoffe zur Folge hat.

Nach einer Auslösung der biologischen Wirkstoffe erfolgt abschließend im letzten Verfahrensschritt die Ausscheidung der ausgelösten Wirkstoffe durch Extrahierung. Die ausgelösten Wirkstoffe werden hierbei sowohl von den verbleibenden Reststoffen als auch im wesentlichen von der Ansatzflüssigkeit getrennt. Auch bei der Durchführung des Verfahrensschritts der Extrahierung ist sicherzustellen, daß die ausgelösten Wirkstoffe beim Trennvorgang nicht zerstört werden. Als mögliche Extrahierungsverfahren kommen beispielsweise Filtern, Destillieren sowie Zentriefugieren in Betracht.

Gemäß einem weiteren Merkmal der Erfindung kann dem Verfahrensschritt des Extrahierens eine Aufkonzentration des erhaltenden Extrakts nachfolgen. Insbesondere ist die Herstellung einer hochkonzentrierten Substanz mit geringem Flüssigkeitsanteil hinsichtlich einer Gewichtsreduzierung von Vorteil. Zudem liegt es im Belieben des Anwenders durch Hinzugabe eines verdünnenden Mittels eine Konzentration seiner Wahl zu erzeugen. Für die Herstellung eines aufkonzentrierten Substrats ist die Anwendung mehrerer an sich bekannter Verfahren möglich. So kann beispielsweise die Aufkonzentration durch Flüssigkeitsentzug mittels Verdampfung erfolgen. Dabei sollte allerdings eine Aufkonzentration bei einer Temperatur von über 80° vermieden werden, da sonst die Gefahr der Zerstörung, zumindest aber der Wirkreduzierung der biologischen Wirkstoffe besteht. Alternativ hierzu kann eine Aufkonzentration mittels Vakuumentgasung durchgeführt werden.

Weitere Merkmale und Vorteile der Erfindung ergeben sich anhand der Beschreibung der nachfolgenden Bespiele. Dabei zeigt Beispiel 1 die Herstellung von biologischen Wirkstoffen zu Konservierungszwecken, Beispiel 2 die Herstellung eines Pflanzenschutzmittels und Beispiel 3 die Herstellung einer Beschichtung für Käse, Wurst und andere Lebensmittel.

### Beispiel 1

Als Ausgangsmaterialien werden verwendet:

| | |
|---|---|
| Oregano | 5,37 Gew.% |
| Piment | 5,80 Gew.% |
| Meerrettich | 5,58 Gew.% |

Die Ausgangsmaterialien werden auf eine Partikelgröße von ungefähr 1 mm bis 3 mm zerkleinert und miteinander zu einem Grundgemenge vermischt. Diesem Grundgemenge wird anschließend im zweiten Verfahrensschritt zur Bildung eines Ansatzes Flüssigkeit hinzugegeben. Im einzelnen werden folgende Flüssigkeitkomponenten verwendet:

| | |
|---|---|
| pflanzliches Öl oder Fett | 0,11 Gew.% |
| Alkohol | 7,14 Gew.% |
| Wasser | 78,05 Gew.%. |

Der fertiggestellte Ansatz wird in seiner Mischung unter Ausschluß von Licht ca. 12 Stunden lang gelagert. Ein Umrühren des Ansatzes oder eine Erwärmung erfolgt nicht. Während der vorgegebenen Lagerdauer von 12 Stunden quellen die pflanzlichen Grundsubstrate auf infolgedessen die enthaltenen biologischen Wirkstoffe ausgelöst werden.

Im abschließenden Verfahrensschritt erfolgt durch Abfilterung die Extrahierung. Hierbei werden die ausgelösten Wirkstoffe von den übrigbleibenden Faserstoffen durch Filterung getrennt. Mittels Vakuum wird zudem der Alkohol abgezogen.

Der so erhaltene Wirkstoff weist zum einen eine keimabtötende sowie eine speziell keimhemmende wie auch zum anderen eine Schimmel und Hefe eliminierende Wirkung auf und eignet sich insbesondere zur Anwendung in pastösen Produkten zur Unterbindung von Hefe- und Schimmelpilzen sowie anderen Verderbniserregern, wie z. B. Colibakterien. Mit Vorteil ist der hergestellte Wirkstoff naturbelassen und somit biologisch abbaubar, leicht bekömmlich und vor allem beeinflußt er nicht den Geschmack des zu konservierenden Produkts.

Durch die rein biologischen Inhaltsstoffe besteht sehr gute Verträglichkeit für jede Person, d. h. insbesondere auch für Magendarmkranke und Allergiker. Dieser biologische Konservierungsstoff wird im oberen Bereich des Dünndarms vollständig abgebaut und beeinflußt somit nicht die lebenswichtige Darmflora. Auch wird das zu konservierende Produkt nicht angegriffen. Zudem hat eine Überdosierung keinen schädlichen Einfluß auf den Organismus und stellt kein Verletzungsrisiko dar.

Das Einbringen des Konservierungsstoffs in bestimmten Konzentrationen und in bestimmte Trägerstoffe ermöglicht die Herstellung einer maßgeschneiderten Konservierung. So kann beispielsweise als Trägerstoff Pektin verwendet werden, welches eine gesundheitliche Förderung des Darmes bewirkt. Auch macht beispielsweise die Beschichtung von Verpackungsmaterial mit einem den Konservierungsstoff aufweisenden Trägerstoff eine Desinfizierung der Verpackung mit giftigen Chemikalien überflüssig. Eine Entkeimung mittels schädlicher Bestrahlung kann ebenfalls entfallen.

### Beispiel 2

Ausgangsmaterial sind bei diesem Beispiel:

| | |
|---|---|
| Brennesselblätter | 20 Gew.% |
| Kirschlorbeeren | 10 Gew.% (Verhältnis von Blättern zu Beeren 1:1) |
| blauer Eisenhut | 10 Gew.% (Verhältnis von Blüten zu Blättern 1:1) |

Die Ingredienzen werden gereinigt, gespült, zerkleinert und anschließend zur Schaffung eines Grundgemenges miteinander vermischt. Der Aufguß zur Bildung eines Ansatzes erfolgt mit Wasser zu 60 Gew.%. Unter Zuführung von Wärme (30°C) wird der Ansatz 12 Stunden lang gelagert. Im Anschluß an die Lagerzeit werden die ausgelösten Wirkstoffe durch Aussieben ausgeschieden und anschließend bei einer Temperatur von ca. 70°C aufkonzentriert.

Alternativ zu der oben aufgeführten Zusammensetzung kann ein Pflanzenschutzmittel auch mit folgenden Ausgangsmaterialien zusammengestellt werden:

| | |
|---|---|
| Moos | 20 Gew.% |
| Flechte | 10 Gew.% |
| Kirschloorbeeren | 10 Gew.% |

Die Bildung eines Ansatzes erfolgt gleichfalls unter Zugabe von 60 Gew.% Wasser. Die nachfolgenden Verfahrensschritte sind identisch zu den oben bereits erläuterten Schritten.

Das so hergestellte Pflanzenschutzmittel ist insbesondere geeignet, Blattläuse und Rosenmehltau sowie Pilz- und Hefebefall zu eliminieren. Gegenüber synthetisch hergestellten Wirkstoffen belastet das nach dem erfindungsgemäße Verfahren hergestellte Pflanzenschutzmittel weder Boden noch Wasser und ist auf natürliche Weise abbaubar. Auch eine Schädigung der zu behandelnden Pflanzen ist selbst bei einer Überdosierung nicht gegeben.

### Beispiel 3

Als Ausgangsmaterialien und Flüssigkeiten werden verwendet:

| Ansatz 1: | |
|---|---|
| Oregano, getrocknet | 50 g |
| 40%iger Alkohol | 350 g |

| Ansatz 2: | |
|---|---|
| Merretichwurzel | 150 g |
| Ingwer | 50 g |
| 40%iger Alkohol | 150 g |

| Ansatz 3: | |
|---|---|
| Knoblauchzehen | 200 g |
| Zwiebeln, geschält | 200 g |
| Wasser | 250 g |

Zur Ausbildung eines Ansatzes werden die jeweiligen Ausgangsmaterialien zusammen mit der jeweiligen Flüssigkeit vermengt und als Ansätze 1, 2 und 3 in ein jeweils luftabschließendes Gefäß gegeben. Im Anschluß daran werden die einzelnen Gefäße in einem Wasserbad auf 65°C für eine Zeitdauer von 30 Minuten temperiert. Für die Fertigstellung der Ansätze werden diese gründlich zerkleinert und umgerührt. Es folgt eine 24-stündige Lagerung der Ansätze bei einer Temperatur von 20°C. Hierbei werden die biologischen Wirkstoffe aus den Grundsubstraten herausgelöst. Im Anschluß an die 24-stündige Lagerung werden die ausgelösten Wirkstoffe durch Filtration ausgeschieden. Die so erhaltenen Fraktionen werden abschließend miteinander vermischt und der Alkoholanteil wird bei ca. 70°C unter Vakuum abgezogen.

Als Natamycin-Ersatz dient das so hergestellte Endprodukt als Beschichtungsmaterial der Konservierung von insbesondere Käse- und Wurstwaren. Es hat sich gezeigt, daß ein mit dem nach Beispiel 3 hergestellten Konservierungsmittel beschichteter Käse oder eine hiermit beschichtete Wurstware nicht zur Schimmelbildung neigt. Im Gegensatz zu Natamycin ist das hier beschriebene Konservierungsmittel nicht toxisch. Natamycin ist bei Überdosierung toxisch. Dieses ist problematisch, da Natamycin in den Käse diffundieren kann.

Mit dem erfindungsgemäßen Verfahren läßt sich mithin auf sehr einfache und umweltschonende Art und Weise ein biologischer Wirkstoff mit keimtötender Wirkung herstellen, der je nach Art der verwendeten pflanzlichen Grundsubstrate bestimmte Eigenschaften aufweist und zu Konservierungs- und Desinfektionszwecken eingesetzt oder als Pflanzenschutzmittel oder Insektenvertilgungsstoffe verwendet werden kann. In besonders vorteilhafter Weise sind die nach dem erfindungsgemäßen Verfahren hergestellten Wirkstoffe naturbelassen und biologisch abbaubar. Sie stellen somit keine Umweltbelastung dar. Zudem besteht die Möglichkeit, die nach diesem Verfahren hergestellten Wirkstoffe mit einem Trägermaterial zu kombinieren, das zusätzlich für den Menschen positive Eigenschaften aufweist. So kann beispielsweise als Trägerstoff Pektin verwendet werden, das eine gesundheitliche Förderung des Darms bewirkt.

## Patentansprüche

1. Verfahren zur Herstellung biologischer Wirkstoffe mit keimtötender und keimhemmender Wirkung umfassend die folgenden Verfahrensschritte:
a) Zubereitung eines Grundgemenges durch Zerkleinern und Mischen verschiedener Arten von pflanzlichen Grundsubstanzen;
b) Zugabe von Flüssigkeit zum Grundgemenge zur Bildung eines Ansatzes mit einem Flüssigkeitsgesamtanteil von mindestens 50 Gew.%;
c) Lagerung des Ansatzes für eine vorgebbare Zeitdauer zur Auslösung biologischer Wirkstoffe aus dem Grundgemenge und
d) Ausscheiden der ausgelösten Wirkstoffe durch Extrahierung.

2. Verfahren nach Anspruch 1, dadurch gekennzeichnet, daß als pflanzliche Grundsubstrate gemäß Schritt a) Beeren, Gemüse, Moose, Flechten, Rinden und/oder Kräuter oder Teile hiervon verwendet werden.

3. Verfahren nach einem der Ansprüche 1 und 2, dadurch gekennzeichnet, daß als weitere pflanzliche Grundsubstanzen Zusatzstoffe verwendet werden.

4. Verfahren nach Anspruch 3, dadurch gekennzeichnet, daß als pflanzliche Zusatzstoffe Blätter, Blüten, Rindenbestandteile oder dergleichen verwendet werden.

5. Verfahren einem der vorhergehenden Ansprüche, dadurch gekennzeichnet, daß als Flüssigkeitszugabe gemäß Schritt b) Wasser verwendet wird.

6. Verfahren einem der vorhergehenden Ansprüche, dadurch gekennzeichnet, daß als Flüssigkeitszugabe gemäß Schritt b) Alkohol verwendet wird.

7. Verfahren nach einem der vorhergehenden Ansprüche, dadurch gekennzeichnet, daß als Flüssigkeitszugabe gemäß Schritt b) Öle und/oder Essige verwendet werden.

8. Verfahren nach einem der vorhergehenden Ansprüche, dadurch gekennzeichnet, daß die Lagerung des Ansatzes gemäß Schritt c) über eine Zeitdauer von wenigstens 6 Stunden erfolgt.

9. Verfahren nach einem der vorhergehenden Ansprüche, dadurch gekennzeichnet, daß die Lagerung gemäß Schritt c) über eine Zeitdauer von 12 Stunden bis 24 Stunden erfolgt.

10. Verfahren nach einem der vorhergehenden Ansprüche, dadurch gekennzeichnet, daß der Ansatz während der Lagerung gemäß Schritt c) erwärmt wird.

11. Verfahren nach einem der vorhergehenden Ansprüche, dadurch gekennzeichnet, daß der Ansatz während der Lagerung gemäß Schritt c) umgerührt wird.

12. Verfahren nach einem der vorhergehenden Ansprüche, dadurch gekennzeichnet, daß die Extrahierung gemäß Schritt d) mittels Filtern erfolgt.

13. Verfahren nach einem der vorhergehenden Ansprüche, dadurch gekennzeichnet, daß die Extrahierung gemäß Schritt d) mittels Destillieren erfolgt.

14. Verfahren nach einem der vorhergehenden Ansprüche, dadurch gekennzeichnet, daß die Extrahierung gemäß Schritt d) mittels Zentrifugieren erfolgt.

15. Verfahren nach einem der vorhergehenden Ansprüche, dadurch gekennzeichnet, daß dem Extrahieren gemäß Schritt d) eine Aufkonzentration des Extrakts nachfolgt.

16. Verfahren nach einem der vorhergehenden Ansprüche, dadurch gekennzeichnet, daß die Aufkonzentration durch Flüssigkeitsentzug mittels Verdampfen erfolgt.

17. Verfahren nach einem der vorhergehenden Ansprüche, dadurch gekennzeichnet, daß die Aufkonzentration mittels Vakuumentgasung durchgeführt wird.

18. Verfahren nach einem der vorhergehenden Ansprüche, dadurch gekennzeichnet, daß die Aufkonzentration bei einer Temperatur von unter 80°C erfolgt.

19. Biologischer Wirkstoff mit keimtötender und keimhemmender Wirkung hergestellt nach dem Verfahren nach einem der vorhergehenden Ansprüche.
